# FASCICULE DE BREVET EUROPEEN

(11) **EP 4 187 132 B1**
(45) Date de publication et mention de la délivrance du brevet: **23.07.2025**
(21) Numéro de dépôt: 22199650.7
(22) Date de dépôt: 04.10.2022
(51) Int. Cl.: F16K 1/30, F16K 35/06, F16K 35/10, F17C 13/04

(54) **DISPOSITIF DE SÉCURITÉ POUR ROBINET DE DISTRIBUTION DE GAZ ÉQUIPANT UN RÉCIPIENT DE GAZ**
SICHERHEITSVORRICHTUNG FÜR EIN GASSPÜLVENTIL IN EINEM GASBEHÄLTER
SAFETY DEVICE FOR A GAS DISPENSING VALVE FITTED TO A GAS CONTAINER

(30) Priorité: 29.11.2021 FR 2112632
(43) Date de publication de la demande: 31.05.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CHANCEL, Fabien, 78350 Jouy en Josas (FR); THOUVIER, Stéphane, 78350 Jouy en Josas (FR); DELBOS, Cedric, 78350 Jouy en Josas (FR)
(74) Mandataire: Air Liquide

(56) Documents cités:
- CN-U- 203 404 480
- FR-A1- 2 991 750
- US-A- 5 957 313
- US-A1- 2011 154 868
- US-A1- 2015 096 334
- US-B1- 6 604 643

## Description

L'invention concerne un récepient de gaz sous pression, notamment de gaz médical, typiquement une bouteille de gaz médical, doté d'un robinet de distribution de gaz équipé d'un dispositif de sécurité amovible permettant d'empêcher une utilisation du gaz par une personne non-autorisée.

Les gaz médicaux conditionnés en récipients de gaz, typiquement en bouteilles de gaz sous pression, sont couramment utilisés pour traiter différentes pathologies chez les personnes qui en souffrent.

Ainsi, le mélange gazeux équimolaire (50%/50% molaire) de protoxyde d'azote (N₂O) et d'oxygène (O₂), couramment appelé MEOPA, a montré une efficacité dans le traitement des douleurs aigües ou chroniques de différentes étiologies, lorsqu'il est administré à un individu, i.e. un patient, par inhalation au moyen d'une interface respiratoire, tel un masque respiratoire, des canules nasales ou analogue.

Certains patients sont traités à l'hôpital mais d'autres peuvent être soignés dans des structures de soins en dehors de l'hôpital ou à leur domicile, c'est-à-dire dans des lieux où les surveillances médicales beaucoup plus légères, voire absentes.

Dans tous les cas, il convient de pouvoir empêcher ou limiter tout mésusage du MEOPA (ou d'un autre gaz médical), tel un usage détourné ou non-conforme, en particulier hors hôpital, où des personnes non malades pourraient être tentées d'inhaler le MEOPA (ou un autre gaz médical) pour tirer parti de ses propriétés euphorisantes à des fins récréatives.

**Le problème** est dès lors de proposer un dispositif ou accessoire de sécurité configuré pour coopérer avec le robinet de distribution de gaz équipant un récipient de gaz sous pression, en particulier un gaz médical, telle une bouteille de gaz, qui soit simple d'utilisation, facile à mettre en place ou à enlever, qui offre une protection efficace contre les mésusages du gaz contenu dans le récipient ou toute autre utilisation non-autorisée.

Le document US2011/154868 A1 divulgue un récipient de gaz sous pression avec un robinet de gaz, comprenant un dispositif de sécurité amovible agencé autour du robinet de distribution de gaz, ledit dispositif de sécurité coopérant avec ledit robinet de distribution de gaz, lorsque la pièce de verrouillage est en position de verrouillage pour empêcher toute distribution de gaz par le raccord de sortie de gaz du robinet de distribution de gaz en empêchant toute manipulation manuelle de l'organe d'ouverture/ fermeture de gaz.

La solution de l'invention concerne un récipient de gaz sous pression, telle une bouteille de gaz sous pression, comprenant un robinet de distribution de gaz comprenant au moins un raccord de sortie de gaz pour distribuer du gaz et au moins un organe d'ouverture/fermeture de gaz commandant la fourniture de gaz au raccord de sortie de gaz, un dispositif de sécurité amovible étant agencé autour du robinet de distribution de gaz, ledit dispositif de sécurité comprenant :
- un corps principal formant manchon comprenant :
   ∘ un logement intérieur délimité par une face interne, destiné à loger au moins une partie d'un robinet de distribution de gaz, et
   ∘au moins une butée de blocage agencée du côté interne du corps principal, c'est-à-dire dans le logement intérieur,
- une pièce de verrouillage comprenant au moins un bras d'arrimage comprenant un épaulement d'arrimage, ladite pièce de verrouillage étant agencée mobile en translation axiale (i.e. selon l'axe vertical AA) dans le corps principal, entre au moins une position de déverrouillage (P₀) et une position de verrouillage (P₁) où :
   i. en position de verrouillage (P₁), l'épaulement d'arrimage dudit au moins un bras d'arrimage coopère avec ladite au moins une butée de blocage du corps principal pour empêcher toute translation de la pièce de verrouillage le long de la face interne du corps principal, et
   ii. en position de déverrouillage (P₀), l'épaulement d'arrimage dudit au moins un bras d'arrimage ne coopère pas avec la butée de blocage du corps principal de sorte que la pièce de verrouillage est libre en translation le long de la face interne du corps principal.

Selon le mode de réalisation considéré, le dispositif de sécurité amovible équipant le récipient de gaz sous pression de l'invention peut comprendre l'une ou plusieurs des caractéristiques suivantes :
- il est amovible, c'est-à-dire configuré pour pouvoir être monté sur et/ou démonté facilement et rapidement du robinet de distribution de gaz.
- le corps principal comprend une paroi périphérique comprenant la face interne délimitant le logement interne.
- la pièce de verrouillage est agencée mobile en translation axiale le long de la face interne au sein du corps principal.
- la butée de blocage est portée par la face interne du corps principal.
- la butée de blocage est agencée sur la paroi périphérique du corps principal, i.e. sur la face interne de ladite paroi périphérique.
- le corps principal a une forme de manchon tubulaire.
- le corps principal comprend un axe vertical AA.
- la pièce de verrouillage comprenant deux bras d'arrimage.
- chaque bras d'arrimage comprend un épaulement d'arrimage.
- les deux bras d'arrimage sont agencés parallèles l'un à l'autre.
- les deux bras d'arrimage sont agencés de sorte que les épaulements d'arrimage se fassent face l'un à l'autre,
- les deux bras d'arrimage sont symétriques l'un de l'autre.
- la butée de blocage du corps principal comprend une surface inférieure sur laquelle viennent prendre appui le ou les épaulement d'arrimage du ou des bras d'arrimage, en position de verrouillage (P₁).
- la butée de blocage comprend une surface inférieure plane.
- la butée de blocage comprend une surface inférieure plane et perpendiculaire à l'axe AA.
- la butée de blocage est formée d'une pièce avec la paroi périphérique du corps principal.
- le corps principal est en polymère souple, par exemple en Nylon^{®} PA12 ou en polymère thermoplastique de type ABS, ou en un autre matériau adapté.
- le ou les bras d'arrimage sont formés d'au moins un matériau élastiquement déformable.
- la pièce de verrouillage est entièrement formée dudit matériau élastiquement déformable..
- le ou les bras d'arrimage de la pièce de verrouillage comprennent chacun une extrémité libre comprenant un profil avant formant rampe.
- l'extrémité libre de chaque bras d'arrimage forme une tête d'arrimage.
- chaque tête d'arrimage porte le profil avant formant rampe.
- le profil avant formant rampe à l'extrémité libre de chaque bras d'arrimage est plan ou courbe, de préférence courbe, c'est-à-dire présentant un rayon de courbure non-nul.
- la butée de blocage du corps principal comprend une surface supérieure conformée pour coopérer avec le profil avant formant rampe du ou de chaque bras d'arrimage de manière à engendrer un écartement, i.e. éloignement, par déformation élastique du ou des bras d'arrimage par rapport à la butée de blocage, lorsque la pièce de verrouillage translate en direction de la butée de blocage et que le profil avant formant rampe du ou des bras d'arrimage vient appuyer sur la surface supérieure conformée de la butée de blocage.
- la pièce de verrouillage translate en direction de la butée de blocage en réponse à un appui d'un utilisateur sur ladite pièce de verrouillage.
- le profil avant formant rampe du ou des bras d'arrimage vient appuyer sur la surface supérieure conformée de la butée de blocage et s'y déplace par coulissement, i.e. glissement, jusqu'à atteindre la position de verrouillage (P₁).
- la surface supérieure de la butée de blocage est conformée pour présenter un ou des rebords courbés, en particulier des arêtes ou angles arrondis, c'est-à-dire présentant un rayon de courbure non-nul.
- la butée de blocage présente deux rebords courbés agencés parallèlement l'un à l'autre et de part et d'autre de la butée de blocage.
- la butée de blocage comprend un perçage traversant, i.e. un passage axial.
- la pièce de verrouillage comprend en outre une pièce-loquet montée mobile sur ladite pièce de verrouillage.
- la pièce-loquet est configurée pour se déplacer depuis une position passive vers une position active
- en position active, la pièce-loquet fait saillie radialement dans le logement intérieur du corps principal formant manchon.
- la pièce-loquet est en position active, lorsque la pièce de verrouillage est en position de verrouillage.
- en position passive, la pièce-loquet est en retrait par rapport au logement intérieur du corps principal, c'est-à-dire qu'elle ne s'y projette pas ou quasiment pas.
- en position active, la pièce-loquet fait saillie radialement dans le logement intérieur du corps principal de manière à pouvoir venir coopérer avec le robinet de distribution de gaz qui y est logé.
- en position passive, la pièce-loquet ne coopère pas avec le robinet de distribution de gaz qui est logé dans le logement intérieur du corps principal.
- la pièce de verrouillage est guidée par des glissières principales agencées dans le corps principal formant manchon, pendant un déplacement entre la position de déverrouillage (P₀) et la position de verrouillage (P₁), ou inversement.
- les glissières principales sont portées ou aménagées dans la paroi périphérique du corps principal formant manchon, en particulier sur la face interne de la paroi périphérique du corps principal.
- les glissières principales sont agencés (approximativement) parallèlement à l'axe vertical AA.
- la pièce-loquet est guidée par des glissières secondaires agencées sur la pièce de verrouillage, pendant un déplacement de la position passive à la position active, ou inversement.
- les glissières secondaires sont agencées obliquement par rapport à l'axe AA.
- un déplacement de la pièce de verrouillage dans les glissières principales engendre un déplacement de la pièce-loquet dans les glissières secondaires.
- les déplacements de la pièce de verrouillage et de la pièce-loquet sont préférentiellement (quasi)simultanés.
- le passage de la pièce de verrouillage de la position de déverrouillage (P₀) à la position de verrouillage (P₁) s'opère lorsqu'un utilisateur actionne manuellement la pièce de verrouillage, en particulier lorsqu'il appuie dessus de sorte de la déplacer en direction de la butée de blocage.
- le passage de la pièce de verrouillage de la position de verrouillage (P₁) à la position de déverrouillage (P₀), c'est-à-dire son retour dans la position de déverrouillage (P₀), s'opère lorsqu'un utilisateur actionne un outil de déverrouillage venant coopérer avec la pièce de verrouillage de manière à libérer les bras d'arrimage de la butée de blocage.
- l'outil de déverrouillage est une clé ou analogue.
- l'outil de déverrouillage comprend une tête d'actionnement configurée pour pouvoir agir sur le ou les bras d'arrimage pour le ou les dissocier de la butée de blocage.
- l'outil de déverrouillage comprend une tête d'actionnement configurée pour agir sur les bras d'arrimage en les déformant élastiquement de manière à engendrer un écartement des bras l'un de l'autre.
- l'outil de déverrouillage comprend une tête d'actionnement de section elliptique ou analogue.
- l'outil de déverrouillage comprend en outre une extrémité libre
- l'extrémité libre de l'outil de déverrouillage prolonge la tête d'actionnement.
- l'extrémité libre de l'outil de déverrouillage est conformée pour venir se loger dans le perçage traversant de la butée de blocage, lorsque l'outil de déverrouillage coopère avec le ou les bras d'arrimage de sorte de les déformer élastiquement, c'est-à-dire lorsque l'utilisateur utilise l'outil de déverrouillage pour libérer la pièce de verrouillage.
- la pièce de verrouillage comprend deux bras d'arrimage agencés sur un cadre.
- le cadre est configuré pour être mobile en translation dans les glissières principales.
- le cadre comprend les glissières secondaires.
- la pièce-loquet est agencée mobile sur le cadre.
- la pièce de verrouillage comprend en outre des premiers moyens de limitation de course coopérant avec des seconds moyens de limitation de course agencés sur le corps principal formant manchon de manière à limiter la course en translation de la pièce de verrouillage par rapport au corps principal.
- la pièce de verrouillage comprenant les deux bras d'arrimage portés par le cadre et la pièce-loquet forment un ensemble mobile.
- un déplacement translatif de la pièce de verrouillage comprenant les deux bras d'arrimage portés par le cadre engendre un déplacement de la pièce-loquet, de préférence aussi translatif.
- les premiers moyens de limitation de course comprennent au moins un logement oblong et les seconds moyens de limitation de course comprennent au moins un doigt de guidage, ou inversement.
- les premiers moyens de limitation de course comprennent deux logements oblongs, i.e. un premier et un deuxième logement oblong, et les seconds moyens de limitation de course comprennent deux doigts de guidage, i.e. un premier et un deuxième doigt de guidage.
- le ou chaque doigt de guidage se projette dans le logement oblong avec lequel il coopère.
- le premier doigt de guidage est agencé de manière à faire saillie dans le premier logement oblong et le deuxième doigt de guidage est agencé de manière à faire saillie dans le deuxième logement oblong.
- chaque logement oblong comprend des extrémités opposées, à savoir une extrémité haute et une extrémité basse, entre lesquelles se déplace un doigt de guidage lorsque la pièce de verrouillage est déplacée par l'utilisateur entre les positions de déverrouillage (P₀) et de verrouillage (P₁), c'est-à-dire de P₀ à P₁, ou inversement.
- le corps principal formant manchon comprend deux expansions longilignes, c'est-à-dire des tiges, bras ou analogues.
- les deux expansions longilignes viennent, via une extrémité distale, se solidariser au corps principal, typiquement à la base du corps principal.
- les deux expansions longilignes comprennent chacune une extrémité proximale libre.
- l'extrémité proximale libre de chaque expansion longiligne se projette en éloignement par rapport au corps principal formant manchon, c'est-à-dire fait saillie extérieurement, i.e. est dirigée vers l'extérieur.
- les deux expansions longilignes viennent se solidariser au corps principal, à proximité de leurs extrémités proximales libres, c'est-à-dire entre les extrémités proximales et distales mais dans la région de chaque extrémité proximale libre.
- les deux expansions longilignes viennent se solidariser au corps principal via une pièce de jonction commune, ladite pièce de jonction commune étant solidaire du corps principal.
- le corps principal a une forme générale de manchon cylindrique.
- le corps principal formant manchon est ouvert à ses extrémités supérieure et inférieure.
- l'extrémité supérieure du corps principal est partiellement obturée par au moins une paroi de toit.
- le corps principal formant manchon est configuré pour être agencé, typiquement enfilé, autour d'un robinet de distribution de gaz via son extrémité inférieure ouverte.
- en position active, la pièce-loquet fait saillie radialement dans le logement intérieur du corps principal, c'est-à-dire se projette dans le logement intérieur, et vient coopérer avec le robinet de distribution de gaz pour empêcher un retrait de dispositif de sécurité amovible du robinet de distribution de gaz.
- en position active, la pièce-loquet fait saillie radialement dans le logement intérieur du corps principal et vient en butée, i.e. vient buter, contre une partie du robinet pour empêcher le retrait du dispositif de sécurité, en particulier la pièce-loquet vient se positionner sous une excroissance ou un élément du robinet, tel un organe de manœuvre rotatif ou autre, ou encore vient se loger sous un épaulement du robinet ou dans un logement du robinet, par exemple, porté, agencé ou aménagé sur ou dans la surface périphérique du robinet.

Par ailleurs, selon le mode de réalisation considéré, le récipient de gaz sous pression de l'invention peut comprendre l'une ou plusieurs des caractéristiques suivantes :
- le dispositif de sécurité amovible l'invention, agencé autour du robinet de distribution de gaz, coopère avec ledit robinet de distribution de gaz, lorsque la pièce de verrouillage est en position de verrouillage (P₁) pour empêcher toute distribution de gaz par le raccord de sortie de gaz du robinet de distribution de gaz en empêchant toute manipulation manuelle de l'organe d'ouverture/fermeture de gaz, en particulier lorsque l'organe d'ouverture/fermeture de gaz est en position de fermeture
- le robinet de distribution de gaz est un robinet à détendeur intégré (RDI).
- l'organe d'ouverture/fermeture de gaz comprend un volant rotatif.
- lorsque la pièce de verrouillage est en position de verrouillage (P₁), la pièce-loquet est en position active et fait saillie radialement dans le logement intérieur du corps principal pour venir coopérer avec le robinet de distribution de gaz pour empêcher le retrait du dispositif de sécurité du robinet de distribution de gaz.
- en position active, la pièce-loquet coopère avec une partie ou un élément du robinet de distribution de gaz, en particulier la pièce-loquet vient buter sur une partie ou un élément du robinet de distribution de gaz formant une butée de retrait empêchant le retrait du dispositif de sécurité.
- le raccord de sortie du robinet vient se loger dans l'échancrure ou logement ouvert, c'est-à-dire prise en sandwich, entre les extrémités proximales et distales des deux expansions longilignes du corps principal de la pièce de verrouillage.
- le récipient est une bouteille de gaz.
- le récipient a un corps cylindrique, de préférence allongé, typiquement une forme en ogive.
- le corps cylindrique est creux, c'est-à-dire qu'il comprend un volume ou compartiment interne pour stocker du gaz sous pression.
- le corps cylindrique comprend un col à son extrémité supérieure et un fond à sa base, c'est-à-dire son extrémité inférieure.
- le corps cylindrique comprend un col traversé par un orifice en communication fluidique avec le compartiment interne du récipient.
- le robinet est agencé au niveau du col du récipient.
- le robinet comprend un circuit de gaz interne en communication fluidique avec le compartiment interne du récipient.
- le récipient contient un gaz médical.
- le récipient contient un gaz choisi parmi l'oxygène et un mélange de protoxyde d'azote (N₂O) et d'oxygène (O₂), tel le MEOPA, à savoir un mélange gazeux équimolaire (50%/50% molaire) de protoxyde d'azote (N₂O) et d'oxygène (O₂), ou tout autre gaz.
- le récipient est en acier, en alliage d'aluminium ou en matériau(x) composite(s).
- le corps du robinet de distribution de gaz est en acier inoxydable ou en alliage de cuivre, par exemple en laiton.
- le robinet comprend un manomètre à aiguille ou un manomètre électronique, c'est-à-dire à affichage numérique.
- le robinet de distribution de gaz comprend un organe d'ouverture/fermeture de gaz mobile en rotation autour de l'axe AA du robinet, en particulier un volan rotatif.
- l'organe d'ouverture/fermeture de gaz est agencé à l'extrémité supérieure du robinet de distribution de gaz.
- le robinet de distribution de gaz comprend un organe de réglage de débit configuré pour régler des débits de gaz compris entre 0 et 30 L/min.

L'invention va maintenant être mieux comprise grâce à la description détaillée suivante, faite à titre illustratif mais non limitatif, en référence aux figures annexées parmi lesquelles :
Fig. 1 est une vue de 3/4 d'un mode de réalisation d'un dispositif de sécurité amovible pour un récipient de gaz selon la présente invention,
Fig. 2 est une vue partielle de dessus du dispositif de sécurité de Fig. 1 monté sur un robinet de distribution de gaz destiné à équiper un récipient de gaz selon la présente invention,
Fig. 3 est une vue en coupe d'une partie de l'architecture intérieure du dispositif de sécurité de Fig. 1,
Fig. 4 représente la pièce de verrouillage agencée mobile dans le corps principal formant manchon du dispositif de sécurité amovible des Fig. 1 et Fig. 2,
Fig. 5 illustre la coopération entre la pièce de verrouillage de Fig. 4 et la pièce-loquet du dispositif de sécurité amovible des Fig. 1 et Fig. 2,
Fig. 6 est une vue agrandie illustrant la coopération entre les bras d'arrimage de la pièce de verrouillage et la butée de blocage du corps principal du dispositif de sécurité amovible des Fig. 1 et Fig. 2,
Fig. 7 est une vue agrandie des moyens de limitation de course agencés sur la pièce de verrouillage et sur le corps principal,
Fig. 8 est une vue de côté montrant un robinet de distribution de gaz selon l'invention équipé du dispositif de sécurité des Fig. 1 et Fig. 2,
Fig. 9 représente un mode de réalisation d'un outil de déverrouillage du dispositif de sécurité des Fig. 1 et Fig. 2,
Fig. 10 schématise le passage de la pièce de verrouillage de Fig. 4 de sa position de déverrouillage (à droite) à sa position de verrouillage (à gauche),
Fig. 11 schématise l'action de l'outil de déverrouillage entre son insertion (à gauche) jusqu'au début de retrait du dispositif de sécurité amovible (à droite),
FIG. 12 schématise une structure particulière de la paroi périphérique de l'orifice à outil porté par le montant supérieur du cadre de la pièce de verrouillage,
FIG. 13 schématise une structure complémentaire de l'outil de déverrouillage de Fig. 9 apte à coopérer avec la structure particulière de la paroi périphérique de l'orifice à outil de FIG. 12,
FIG. 14 schématise la coopération entre la pièce-loquet et le corps principal du dispositif de sécurité pour un récipient de gaz selon la présente invention, et
FIG. 15 schématise un récipient de gaz pouvant être équipé d'un robinet de distribution de gaz et d'un dispositif de sécurité amovible selon la présente invention.

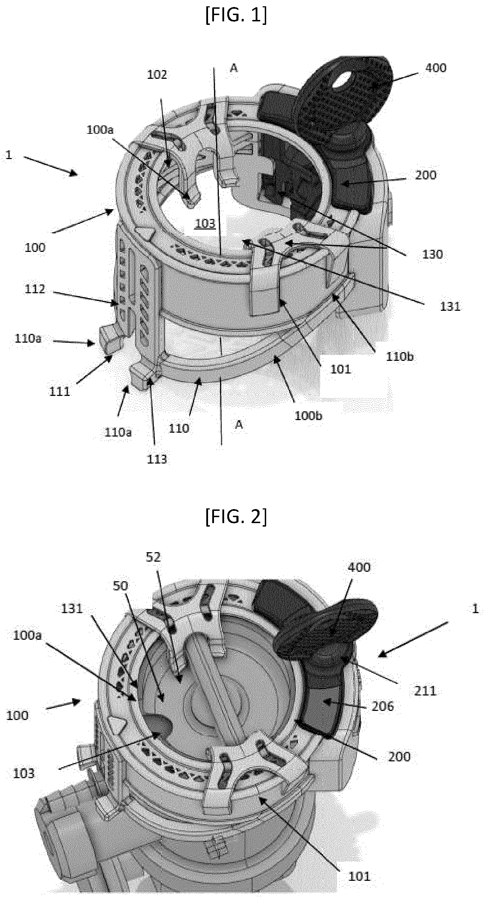

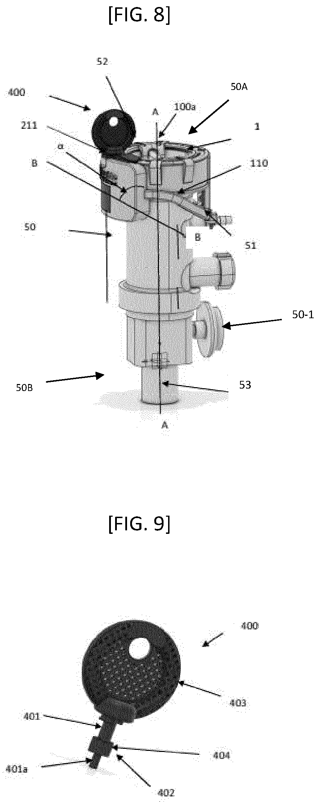

Fig. 1 est une vue de 3/4 d'un mode de réalisation d'un dispositif de sécurité amovible 1 destiné à être agencé sur un robinet de distribution de gaz 50, tel à robinet à détente intégrée (RDI), tel qu'illustré notamment sur Fig. 8, destiné à équiper un récipient de gaz 500 selon la présente invention.

Le dispositif de sécurité 1 comprend un corps principal 100 ayant une forme de manchon 101, à savoir ici une forme générale cylindrique creuse. Il comprend une paroi périphérique dont la face interne 102 délimite un compartiment ou logement intérieur 103 dimensionné et configuré pour loger le robinet 50, comme schématisé en Fig. 2.

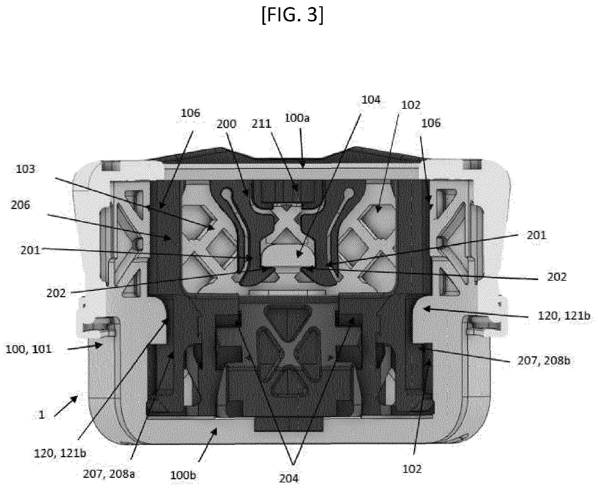

Une (au moins) butée de blocage 104 visible en Fig. 3, est agencée du côté interne du corps principal 100 formant manchon 101 d'axe vertical AA, par exemple portée par la face interne 102. La butée 104 est dirigée vers l'axe vertical AA du corps principal 100.

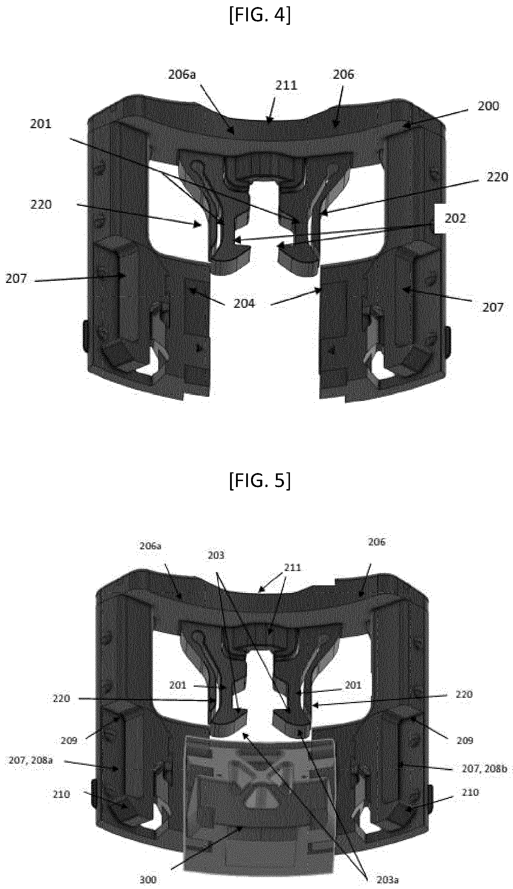

Par ailleurs, est prévu aussi une pièce de verrouillage 200 mobile comprenant ici deux bras d'arrimage 201 comprenant chacun un épaulement d'arrimage 202 situés ici à proximité des extrémités libres des deux bras 201. Les deux bras d'arrimage 201 sont agencés parallèles l'un à l'autre et se font face, comme illustré en Fig. 3 et Fig. 4, de sorte que les épaulements d'arrimage 202 soient situés en regard l'un de l'autre, c'est-à-dire que les deux bras 201 sont sensiblement symétriques l'un de l'autre. Les extrémités libres des bras 201 et les épaulements d'arrimage 202 forment ensemble des crochets ou analogues.

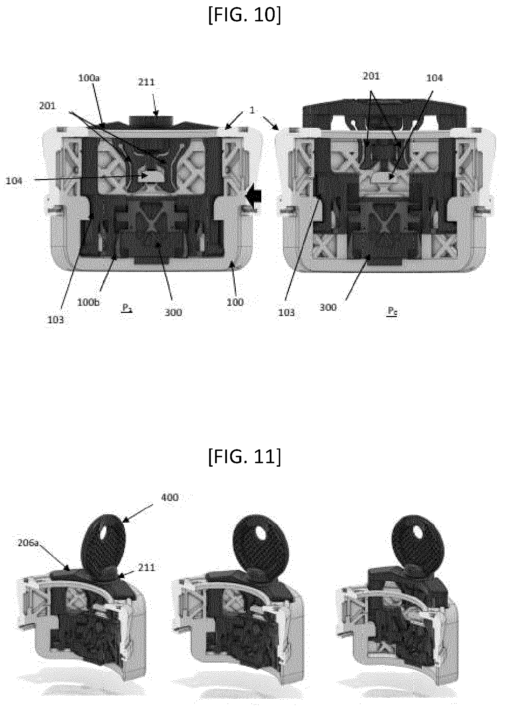

La pièce de verrouillage 200 est agencée mobile en translation dans le logement interne 103, typiquement le long de la face interne 102, du corps principal 100, c'est-à-dire sensiblement selon l'axe AA, entre au moins une position de déverrouillage P₀ et une position de verrouillage P₁, comme illustré en Fig. 10.

En position de verrouillage P₁, schématisée en Fig. 3, Fig. 6 et Fig. 10 (à gauche), l'épaulement d'arrimage 202 de chaque bras d'arrimage 201 coopère avec la butée de blocage 104 du corps principal 2 pour empêcher toute translation de la pièce de verrouillage 200 dans le corps principal 100. Autrement dit, les épaulements 202 des bras d'arrimage 201 agissent comme des crochets venant s'accrocher à la butée 104 qui est prise en sandwich entre les bras d'arrimage 201.

A cette fin, la butée de blocage 104 du corps principal 100 comprend une surface inférieure 104a, ici plane, de préférence perpendiculaire à l'axe AA, sur laquelle viennent prendre appui les épaulement d'arrimage 202 des bras d'arrimage 201, afin de s'y « accrocher » et ainsi bloquer la pièce de verrouillage 200 en position de verrouillage P₁. Elle comprend par ailleurs une surface supérieure 104b, opposée à la surface inférieure 104a, laquelle est conformée 104c pour coopérer avec le profil avant 203a des extrémité libre 203 des bras d'arrimage 201, par exemple pour présenter des arêtes arrondies 105, comme expliqué ci-après.

Par ailleurs, les bras d'arrimage 201 comprennent chacun une extrémité libre 203, aussi appelée « tête », comprenant un profil avant 203a formant rampe. Les deux bras d'arrimage 201 de la pièce de verrouillage 200 sont réalisés en un matériau flexible, i.e. déformable, typiquement un polymère.

Lorsque la pièce de verrouillage 200 se déplace en translation vers la butée 104 sous l'effet de la force de poussée manuelle qui lui est appliquée par l'utilisateur, les profils avant 203a formant rampes des bras d'arrimage 201 viennent au contact direct de la surface supérieure 104b de la butée et y « glisse », notamment le long des arêtes arrondies 105 et, du fait de leur flexibilité, les deux bras d'arrimage 201 sont alors repoussés par la butée 104 de sorte qu'ils s'écartent l'un de l'autre, cet écartement étant plus prononcé à leurs extrémités libres 203 qu'à leurs extrémités amont fixes 205. Cet écartement des bras 201 va permettre aux épaulements d'arrimage 202 des bras d'arrimage de passer la butée 104 pour venir se positionner sous la butée 104 sous l'effet du relâchement des bras 201 se produisant alors.

En d'autres termes, il se produit un écartement par déformation élastique des bras d'arrimage 201 par rapport à la butée de blocage 104, lorsque la pièce de verrouillage 200 translate en direction de la butée de blocage 104 et que le profil avant 203a formant rampe de chacun des bras d'arrimage 201 vient appuyer sur la surface supérieure 104b conformée 104c de la butée de blocage 104, en particulier au niveau de ses rebords 105 courbés, i.e. des arêtes arrondies.

Les épaulement d'arrimage 202 qui se retrouvent sous la butée d'arrimage 104, assurent ensuite un verrouillage de la pièce de verrouillage 200 sur la butée 104 en venant prendre appui sur sa surface inférieure 104a, comme déjà expliqué et illustré en Fig. 3 notamment.

A l'inverse, en position de déverrouillage P₀, schématisée en Fig. 10 (à droite), les épaulements d'arrimage 202 des bras d'arrimage 201 ne coopère pas ou plus avec la butée de blocage 104 du corps principal 100 de sorte que la pièce de verrouillage 200 est libre en translation dans le corps principal 100, notamment le long de la face interne 102.

Comme déjà indiqué, le passage de la position de déverrouillage P₀ à la position de verrouillage P₁ est obtenu via un appui manuel de la part d'un utilisateur, selon l'axe vertical AA, sur la surface supérieure 200a de la pièce de verrouillage 200. Autrement dit, l'utilisateur opère une force d'appui dirigée selon l'axe AA et vers le bas, ce qui repousse la pièce de verrouillage 200 en direction de la butée 104, c'est-à-dire en direction du robinet 50.

Une fois en position de verrouillage P₁, pour revenir à la position de déverrouillage P₀, notamment pour pouvoir retirer le dispositif de sécurité 1 du robinet 50 sur lequel il est monté, l'utilisateur doit utiliser un outil de déverrouillage spécifique 400, telle la clé illustrée notamment en Fig. 9 ou analogue, qui vient alors coopérer avec la pièce de verrouillage 200 de manière à libérer les bras d'arrimage 201 de la butée de blocage 104.

Dans le mode de réalisation présenté, l'outil de déverrouillage 400 a une forme de clé actionnable manuellement en rotation par l'utilisateur. Plus précisément, cet outil 400 comprend une tige allongée 401 surmontée d'une portion arrière 403 servant à la manipulation par l'utilisateur, et portant à son extrémité proximale 401a, une tête d'actionnement 402 conformée pour pouvoir agir sur les bras d'arrimage 201 pour les dissocier de la butée de blocage 104 en les écartant l'un de l'autre.

Pour ce faire, la tête d'actionnement 401 est doté d'une portion ou section elliptique 404 ou analogue présentant une dimension supérieure à la section/diamètre de la tige allongée 401.

D'abord, la tête d'actionnement 401 de l'outil 400 est introduite au travers de l'orifice à outil 211, c'est-à-dire d'un passage aménagé au travers de la paroi de toit de la pièce de verrouillage 200 formant le montant supérieur 206a du cadre 206, comme expliqué ci-après. Elle vient alors se positionner entre les bras 201. Ensuite, lorsque l'outil 400 est tourné par l'utilisateur, la section elliptique 404 de la tête d'actionnement 401 va aller agir sur les bras d'arrimage 201 en les déformant élastiquement de manière à engendrer un écartement des bras 201 l'un de l'autre, ce qui permet alors de les faire passer la butée 104, lors d'un déplacement vers le haut de la pièce 200, i.e. un retrait.

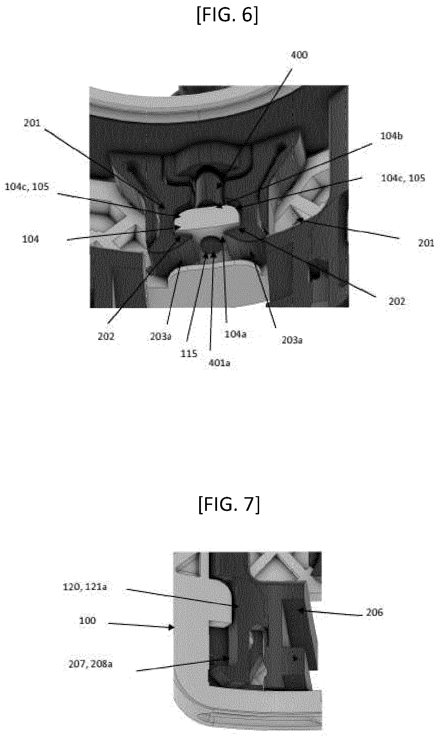

Afin de garantir un positionnement de l'outil 400 par rapport aux bras 201, on prévoit un perçage 115 traversant dans la butée de blocage 104, comme visible sur Fig. 6, au sein duquel peut venir se loger l'extrémité libre 401a de la tige allongée 401.

Par ailleurs, comme déjà dit, le montant supérieur 206a du cadre 206 comprend un orifice à outil 211 débouchant dans un passage à outil traversant, lequel sert de guide pour l'introduction de l'outil 400, typiquement de la clé de Fig. 9. Cet orifice à outil 211 est dimensionné pour permettre aussi le passage de la section elliptique 404 de la tête d'actionnement 401 de l'outil 400.

Comme illustré en Fig.3 et Fig. 6, la pièce de verrouillage 200 comprend aussi une pièce-loquet 300 montée mobile sur la pièce de verrouillage 200, qui est configurée pour se déplacer depuis une position passive vers une position active dans laquelle la pièce-loquet 300 fait saillie radialement dans le logement intérieur 103 du corps principal 100 formant manchon 101, lorsque la pièce de verrouillage 200 est en position de verrouillage P₁. La position passive correspond à la position adoptée par la pièce-loquet 300 lorsque la pièce de verrouillage 200 est en position de verrouillage P₀.

Lorsque la pièce-loquet 300 est en position active, elle fait saillie radialement dans le logement intérieur 103 du corps principal 100 de sorte de venir coopérer avec le robinet de distribution de gaz 50 pour empêcher un retrait de dispositif de sécurité 1 amovible du robinet de distribution de gaz 50. Par exemple, la pièce-loquet 300 peut venir en butée sur une partie ou un élément du robinet, en particulier elle peut venir se positionner sous une excroissance, sous un épaulement, dans un logement ou sous ou dans un élément du robinet 50, tel un organe de manœuvre rotatif ou autre, afin d'empêcher le retrait du dispositif de sécurité 1.

A l'inverse, en position passive, la pièce-loquet 300 ne coopère pas avec le robinet de distribution de gaz 50 puisqu'elle est en retrait par rapport au robinet 50, c'est-à-dire rétractée pour ne plus ou à peine faire saillie dans le logement interne 103 de sorte de ne plus venir en butée par exemple contre le robinet 50. Ceci libère le dispositif de sécurité 1 du robinet 50 et permet alors à l'utilisateur d'opérer un retrait dudit dispositif de sécurité 1 amovible du robinet de distribution de gaz 50, en lui donnant ainsi accès à (aux) l'organe d'ouverture/fermeture du gaz 52.

La séquence ou cinématique de déverrouillage au moyen de l'outil de déverrouillage 400 est schématisée en Fig. 11, depuis son insertion le long de la face interne 102 du corps principal 100 (à gauche), son actionnement en rotation par l'utilisateur (au centre) et jusqu'au début de retrait du dispositif de sécurité amovible 1 (à droite).

Afin de guider les déplacements des pièces ou éléments, on prévoit des rails ou glissières. Ainsi, dans le mode de réalisation proposé, la pièce de verrouillage 200 est guidée par des glissières principales 106 agencées dans le corps principal 100, pendant un déplacement entre la position de déverrouillage P₀ et la position de verrouillage P₁, ou inversement, et la pièce-loquet 300 est guidée par des glissières secondaires 204 agencées sur la pièce de verrouillage 200 pendant un déplacement de la position passive à la position active, ou inversement.

Il est à noter que les déplacements entre les positions de déverrouillage P₀ et de verrouillage P₁ se fait axialement selon l'axe vertical AA, alors que ceux entre les positions passive et active se font préférentiellement en oblique par rapport à l'axe AA, c'est-à-dire selon un axe BB formant un angle α non-nul et inférieur à 90°avec l'axe AA, comme schématisé en Fig. 8, par exemple compris entre 30 et 60° environ.

Comme illustré en Fig. 4 notamment, la pièce de verrouillage 200 comprend un cadre 206 portant lui-même les deux bras d'arrimage 201, lequel est configuré pour être mobile en translation dans les glissières principales 106. Le cadre 206 comprend les glissières secondaires 204 de sorte que la pièce-loquet 300 soit agencée mobile sur le cadre 206 au sein desdites glissières secondaires 204.

Le cadre 206 est préférentiellement entièrement formé de polymère, par exemple par moulage injection, impression 3D ou analogue.

De plus, afin de limiter la course en translation axiale AA de la pièce de verrouillage 200, typiquement du cadre 206, par rapport au corps principal 100, on prévoit sur la pièce de verrouillage 200, typiquement sur le cadre 206, des premiers moyens de limitation de course 207 coopérant avec des seconds moyens de limitation de course 120 agencés sur le corps principal 100 formant manchon 101, comme illustré en Fig. 4 et Fig. 7.

Ici, les premiers moyens de limitation de course 207 comprennent des premier et second logements oblongs 208a, 208b, c'est-à-dire s'étendant axialement selon l'axe AA, et portés par le cadre 206 et les seconds moyens de limitation de course 120 comprennent des premier et second doigts de guidage 121a, 121b portés pour le corps 100, ou inversement, comme illustré en Fig. 3.

Les doigts de guidage 121a, 121b se projettent et se déplacent dans les logements oblongs 208a, 208b, ce qui limite le déplacement global du cadre 206, donc de la pièce de verrouillage 200, selon l'axe AA. Autrement dit, chaque logement oblong 208a, 208b comprend des extrémités opposées 209, 210, à savoir une extrémité haute 209 et une extrémité basse 210, entre lesquelles se déplace l'un des doigts de guidage 121a, 121b, lorsque la pièce de verrouillage 200 est déplacée par l'utilisateur entre les positions de déverrouillage (P₀) et de verrouillage (P₁), c'est-à-dire de P₀ à P₁, ou inversement.

En fait, la pièce de verrouillage 100 comprenant les deux bras d'arrimage 201 portés par le cadre 206 et la pièce-loquet 300 forment un ensemble mobile puisqu'un déplacement translatif selon l'axe AA de la pièce de verrouillage 100, y compris les deux bras d'arrimage 201 et le cadre engendre 206, conduit à un déplacement translatif simultané (ou quasi simultané) de la pièce-loquet 300 selon l'axe BB.

Par ailleurs, comme visible sur Fig. 1 et Fig. 8, le corps principal 100 formant manchon 101 comprend deux expansions longilignes 110, telles des tiges, bras ou analogues, qui viennent, via une extrémité distale 110b, se solidariser au corps principal 100, typiquement à la base du corps principal 100.

Les deux expansions longilignes 110 comprennent chacune aussi une extrémité proximale libre 110a qui se projette en éloignement par rapport au corps principal 100 formant manchon 101, c'est-à-dire fait saillie extérieurement. Les deux extrémités proximales libres 110a sont écartées l'une de l'autre mais parallèles l'une à l'autre de manière à former entre elles une échancrure 111, c'est-à-dire un logement ouvert, par exemple en forme de U ou analogue.

Les deux expansions longilignes 110 viennent se solidariser au corps principal 100 aussi à proximité de leurs extrémités proximales libres 110a, c'est-à-dire en un site de liaison 113 entre les extrémités proximales et distales 110a, 110b mais dans la région et à proximité immédiate de chaque extrémité proximale libre 110a. Plus précisément, cela se fait au moyen d'une pièce de jonction commune 112 qui est solidaire du corps principal 100, c'est-à-dire qui y est fixée.

Lorsque le dispositif de sécurité 1 est agencé sur un robinet de distribution de gaz 50 équipant un récipient de gaz selon l'invention, lequel robinet est équipé d'un raccord de sortie 51 servant à la fourniture du gaz à un tuyau flexible ou à un dispositif utilisant le gaz venant se raccorder fluidiquement au raccord de sortie 51, comme illustré en Fig. 8, le raccord de sortie 51 vient se loger dans l'échancrure ou logement ouvert 111 de manière à être pris en sandwich entre les extrémités proximales et distales 110a, 110b des deux expansions longilignes 110, ce qui participe à un bon maintien du dispositif de sécurité 1 sur le robinet de distribution de gaz 50 en empêchant notamment toute rotation dudit dispositif de sécurité 1 (autour de l'axe AA).

D'un façon générale, en position de déverrouillage (P₀), le dispositif de sécurité 1 de l'invention peut être désolidarisé, c'est-à-dire démonté, du robinet de distribution de gaz 50 sur lequel il est installé, alors qu'en position de verrouillage (P₁), le dispositif de sécurité 1 de l'invention ne peut pas être désolidarisé, c'est-à-dire démonté, du robinet 50 sur lequel il est installé, et sa rotation autour de l'axe AA est entravée par les deux expansions longilignes 110 qui coopèrent avec le raccord de sortie 51 du robinet 50 via leurs extrémités proximales libres 110a.

Enfin, comme visible notamment sur Fig. 1 et Fig.2, le corps principal 100 qui a une forme générale de manchon cylindrique 101 est ouvert à ses extrémités supérieure 101a et inférieure 101b.

A l'extrémité inférieure 101b, l'ouverture est suffisamment large pour permettre un enfilement du corps principal 100 à la manière d'un manchon 101 sur le robinet 50.

Par ailleurs, l'extrémité supérieure 101a peut n'être que partiellement obturée par une (ou des) paroi de toit 130 en laissant une ouverture large 131 suffisante pour permettre à l'utilisateur de distinguer le robinet 50 situé en dessus et par exemple s'assurer que celui-ci est ouverte ou, à l'inverse, fermé, mais insuffisante pour permettre à une personne non-habilitée, c'est-à-dire non munie de l'outil de déverrouillage 400, d'accéder aux organes de réglage du robinet 50, tel que volant de manœuvre commandant la fourniture de gaz et/ou le réglage du débit.

La ou les parois de toit 130 peuvent être pleines ou ajourées, par exemple former une structure de type grille ou analogue.

Selon un mode de réalisation particulier, comme illustré en Fig. 4 et Fig. 5, la pièce de verrouillage 100 comprend aussi deux éléments d'arrêt 220 agencés en parallèle des deux d'arrimage bras 201 et à proximité de ceux-ci afin de stopper ou limiter leur déformation élastique lorsqu'ils sont écartés l'un de l'autre et, par ailleurs, de la butée 104 sous l'action de la tête d'actionnement 401 de l'outil lors d'un retrait ou, à l'inverse, lors d'un mouvement d'appui par l'utilisateur visant à déplacer la pièce de verrouillage 100 en direction de la butée 104 pour la mettre en position de verrouillage (P₁).

Les deux éléments d'arrêt 220 sont par exemple des butées longilignes, comme schématisé en Fig. 4 et Fig. 5, portées par le cadre 206, de préférence formées d'une pièce avec le reste du cadre 206. Ils sont agencés de sorte que les bras 201 soient situés entre ces éléments d'arrêt 220 et la butée 104. Préférentiellement, les butées longilignes sont agencées parallèles et face aux bras 201 et à faible distance de ceux-ci, cette distance étant choisie pour correspondre à la déformation maximale désirée des bras flexibles 201.

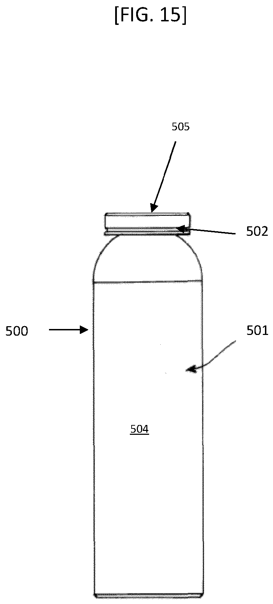

D'une façon générale, comme schématisé sur Fig. 8, un dispositif de sécurité 1 est utilisable pour protéger le robinet de distribution de gaz 50 équipant un récipient de gaz 500, telle une bouteille de gaz, tel qu'illustré en Fig. 15, afin d'empêcher qu'une personne non-habilitée d'utiliser le gaz, c'est-à-dire de bloquer l'accès à (ou aux) l'organe de commande 52, tel qu'un volant rotatif (cf. Fig. 2) mobile en rotation autour de l'axe vertical AA du robinet 50, aménagé à l'extrémité supérieure du robinet 50 et ainsi rendre impossible leur manipulation, donc la distribution de gaz.

Comme on le voit, le dispositif de sécurité 1 vient se positionner tel un manchon autour de la partie supérieure 50A du robinet de distribution de gaz 50 en bloquant l'accès à l'organe de commande 52 qui est mobile en rotation autour de l'axe AA du robinet 50.

Le robinet de distribution de gaz 50 vient, quant à lui, se fixer par vissage de sa base 53, située à son extrémité inférieure 50B, sur le récipient 500, en particulier au col 502 d'une bouteille de gaz, notamment de gaz médical, typiquement une bouteille en forme d'ogive ou analogue, comme illustré en Fig. 15. Le robinet 50 peut comprendre un manomètre 50-1, qui peut être à aiguille ou électronique, c'est-à-dire à affichage numérique, ainsi que d'autres composants, comme un embout de remplissage.

Le récipient 500 comprend généralement un corps cylindrique 501, de préférence de forme allongée, avec un volume ou compartiment interne 504 dans lequel est stocké le gaz sous pression, comme illustré en Fig. 15. Le corps 501 comprend un col 502 traversé par un orifice 505 communiquant avec le volume interne 504, au niveau duquel est fixé le robinet de distribution de gaz 50, par exemple un RDI. Le circuit de gaz interne du robinet de distribution de gaz 50 est en communication fluidique avec le compartiment interne 504 du corps cylindrique 501, via l'orifice 505, afin de pouvoir acheminer le gaz jusqu'à un raccord de sortie 51 porté par le corps du robinet 50 auquel vient typiquement se raccorder un tuyau flexible ou tout autre dispositif médical acheminant ou utilisant le gaz.

Le réglage du débit de gaz désiré peut se faire au moyen d'un organe de réglage du débit de gaz, par exemple des débits compris entre 0 et 30 L/min. Selon le mode de réalisation, l'organe de réglage du débit de gaz et l'organe de commande 52 peuvent être des organes distincts, l'un permettant d'autoriser ou stopper/interdire la circulation du gaz vers le raccord de sortie, et l'autre de régler le débit, ou un même organe remplissant des deux fonctions.

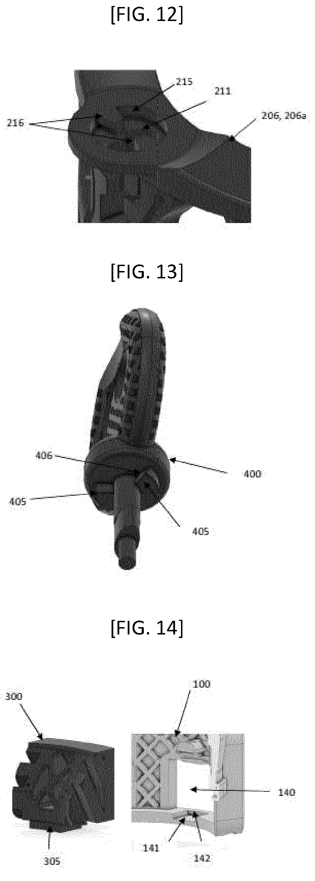

FIG. 12 schématise un mode de réalisation particulier dans lequel la paroi périphérique 215 de l'orifice à outil 211 du passage traversant le montant supérieur 206a du cadre 206, a été conformée pour faciliter l'extraction de la pièce de verrouillage 200 du corps principal 100. Comme on le voit, deux petites expansions radiales ou dents 216 ont été aménagées dans la paroi périphérique 215 de l'orifice à outil 211, lesquelles se projettent radialement dans l'orifice à outil 211.

Ces deux dents 216 sont destinées à venir coopérer avec des butées 405 ou analogues agencées sur l'outil 400, comme illustré sur Fig. 13, en particulier avec un épaulement d'arrimage 406 porté par chaque butée 405.

Ces butées 405 permettent de stopper la course de l'outil 400 lorsqu'il est mis en rotation par l'utilisateur, alors que les épaulements 406 viennent coopérer avec les deux dents 216 qui s'y logent pour permettre de solidariser l'outil 400 à la pièce de verrouillage 200 et faciliter ainsi son retrait du corps principal 100.

Fig. 14 schématise un mode de réalisation de la pièce-loquet 300 montée mobile sur ladite pièce de verrouillage 200. Afin d'éviter que cette pièce-loquet 300 ne puisse sortir intempestivement au travers de la fenêtre 140 aménagée dans le corps principal 100 formant manchon 101, lors de ses déplacements, une petite glissière 141 terminée par une butée d'arrêt 142 est agencée dans la paroi du corps principal 100 formant manchon 101, en partie basse de la fenêtre 140. La petite glissière 141 et la butée d'arrêt 142 coopèrent avec une structure-guide 305 agencée sous la pièce-loquet 300 pour guider les déplacements translatifs de la pièce-loquet 300 et la maintenir dans la petite glissière 141.

## Revendications

1. Récipient de gaz sous pression (500) comprenant un robinet de distribution de gaz (50) comprenant au moins un raccord de sortie de gaz (51) pour distribuer du gaz et au moins un organe d'ouverture/fermeture de gaz commandant la fourniture de gaz au raccord de sortie de gaz (51), un dispositif de sécurité (1) amovible étant agencé autour du robinet de distribution de gaz (50), ledit dispositif de sécurité (1) comprenant :
- un corps principal (100) formant manchon (101) comprenant :
o un logement intérieur (103) délimité par une face interne (102), destiné à loger au moins une partie d'un robinet de distribution de gaz (50), et
o au moins une butée de blocage (104) agencé du côté interne du corps principal (100),
- une pièce de verrouillage (200) comprenant au moins un bras d'arrimage (201) comprenant un épaulement d'arrimage (202), ladite pièce de verrouillage (200) étant agencée mobile en translation axiale (AA) dans le corps principal (100), entre au moins une position de déverrouillage (P₀) et une position de verrouillage (P₁) où :
a) en position de verrouillage (P₁), l'épaulement d'arrimage (202) dudit au moins un bras d'arrimage (201) coopère avec ladite au moins une butée de blocage (104) du corps principal (2) pour empêcher toute translation de la pièce de verrouillage (200) le long de la face interne (102) du corps principal (100), et
b) en position de déverrouillage (P₀), l'épaulement d'arrimage (202) dudit au moins un bras d'arrimage (201) ne coopère pas avec la butée de blocage (104) du corps principal (100) de sorte que la pièce de verrouillage (200) est libre en translation le long de la face interne (102) du corps principal (100),
et ledit dispositif de sécurité (1) coopérant avec ledit robinet de distribution de gaz (50), lorsque la pièce de verrouillage (200) est en position de verrouillage (P₁) pour empêcher toute distribution de gaz par le raccord de sortie de gaz (51) du robinet de distribution de gaz (20) en empêchant toute manipulation manuelle de l'organe d'ouverture/fermeture de gaz (52).

2. Récipient selon la revendication 1, **caractérisé en ce que** la pièce de verrouillage (200) comprend deux bras d'arrimage (201) comprenant chacun un épaulement d'arrimage (202), les deux bras d'arrimage (201) étant agencés parallèles l'un à l'autre avec les épaulement d'arrimage (202) se faisant face l'un à l'autre.

3. Récipient selon l'une des revendications précédentes, **caractérisé en ce que** la butée de blocage (104) du corps principal (100) comprend une surface inférieure (104a) sur laquelle viennent prendre appui le ou les épaulement d'arrimage (202) du ou des bras d'arrimage (201), en position de verrouillage (P₁), de préférence la surface inférieure (104a) est plane.

4. Récipient selon l'une des revendications précédentes, **caractérisé en ce que** le ou les bras d'arrimage (201) sont formés d'au moins un matériau élastiquement déformable, de préférence au moins un polymère.

5. Récipient selon l'une des revendications précédentes, **caractérisé en ce que** :
- le ou les bras d'arrimage (201) de la pièce de verrouillage (200) comprennent chacun une extrémité libre (203) comprenant un profil avant (203a) formant rampe et
- la butée de blocage (104) du corps principal (100) comprend une surface supérieure (104b) conformée (104c) pour coopérer avec le profil avant (203a) formant rampe du ou de chaque bras d'arrimage (201) de manière à engendrer un écartement par déformation élastique du ou des bras d'arrimage (201) par rapport à la butée de blocage (104), lorsque la pièce de verrouillage (200) translate en direction de la butée de blocage (104) et que le profil avant (203a) formant rampe du ou des bras d'arrimage (201) vient appuyer sur la surface supérieure (104b) conformée (104c) de la butée de blocage (104).

6. Récipient selon la revendication 5, **caractérisé en ce que** :
- le profil avant (203a) formant rampe à l'extrémité libre (203) de chaque bras d'arrimage (201) est plan ou courbe et/ou
- la surface supérieure (104b) de la butée de blocage (104) est conformée (104c) pour présenter un ou des rebords (105) courbés.

7. Récipient selon la revendication 1, **caractérisé en ce que** la pièce de verrouillage (200) comprend en outre une pièce-loquet (300) montée mobile sur ladite pièce de verrouillage (200) et configurée pour se déplacer depuis une position passive vers une position active dans laquelle la pièce-loquet (300) fait saillie radialement dans le logement intérieur (103) du corps principal (100) formant manchon (101), lorsque la pièce de verrouillage (200) est en position de verrouillage (P₁).

8. Récipient selon les revendications 1 ou 7, **caractérisé en ce que** :
- la pièce de verrouillage (200) est guidée par des glissières principales (106) agencées dans le corps principal (100) formant manchon (101), pendant un déplacement entre la position de déverrouillage (P₀) et la position de verrouillage (P₁), ou inversement, et/ou
- la pièce-loquet (300) est guidée par des glissières secondaires (204) agencées sur la pièce de verrouillage (200) pendant un déplacement de la position passive à la position active, ou inversement.

9. Récipient selon la revendication 1, **caractérisé en ce que** la pièce de verrouillage (200) comprend deux bras d'arrimage (201) agencés sur un cadre (206), de préférence la pièce-loquet (300) est agencée mobile sur le cadre (206).

10. Récipient selon l'une des revendications précédentes, **caractérise en ce qu'**il comprend un corps cylindrique (501) définissant un volume interne pour y stocker du gaz, en particulier un gaz médical.

11. Récipient selon l'une des revendications précédentes, **caractérisé en ce qu'**il est une bouteille de gaz sous pression.

12. Récipient selon l'une des revendications précédentes, **caractérisé en ce que** le robinet de distribution de gaz (20) comprend un organe d'ouverture/fermeture de gaz (52) mobile en rotation autour de l'axe AA du robinet (50), ledit organe d'ouverture/fermeture de gaz (52) étant agencé à l'extrémité supérieure (50A) du robinet de distribution de gaz (20).

13. Récipient selon l'une des revendications 7 à 9, **caractérisé en ce qu'**en position active, la pièce-loquet (300) fait saillie radialement dans le logement intérieur (103) du corps principal (100) et vient coopérer avec le robinet de distribution de gaz (50) pour empêcher un retrait de dispositif de sécurité (1) amovible du robinet de distribution de gaz (50).

14. Récipient selon l'une des revendications 7 à 9 ou 13, **caractérisé en ce qu'**en position active, la pièce-loquet (300) fait saillie radialement dans le logement intérieur (103) du corps principal (100) et vient en butée contre une partie du robinet (50) pour empêcher le retrait du dispositif de sécurité (1).

15. Utilisation d'un récipient selon l'une des revendications précédentes pour stocker un gaz médical choisi parmi l'oxygène et un mélange de protoxyde d'azote (N₂O) et d'oxygène (O₂).

## Patentansprüche

1. Druckgasbehälter (500), der ein Gasabgabeventil (50) umfasst, das mindestens einen Gasauslassstutzen (51) zum Abgeben von Gas und mindestens ein Öffnungs-/Schließelement für Gas, das die Ausgabe von Gas an den Gasauslassstutzen (51) steuert, umfasst, wobei eine abnehmbare Sicherheitsvorrichtung (1) um das Gasabgabeventil (50) herum angeordnet ist, wobei die Sicherheitsvorrichtung (1) umfasst:
- einen Hauptkörper (100), der eine Hülse (101) bildet, umfassend:
∘ eine innere Aufnahme (103), die durch eine Innenfläche (102) begrenzt wird und dazu bestimmt ist, mindestens einen Teil eines Gasabgabeventils (50) aufzunehmen, und
∘ mindestens einen Blockieranschlag (104), der auf der Innenseite des Hauptkörpers (100) angeordnet ist,
- ein Verriegelungsteil (200), das mindestens einen Kopplungsarm (201) umfasst, der eine Kopplungsschulter (202) umfasst, wobei das Verriegelungsteil (200) translatorisch axial (AA) beweglich, zwischen mindestens einer Entriegelungsstellung (P₀) und einer Verriegelungsstellung (P₁) in dem Hauptkörper (100) angeordnet ist, wobei:
a) die Kopplungsschulter (202) des mindestens einen Kopplungsarms (201) in der Verriegelungsstellung (P₁) mit dem mindestens einen Blockieranschlag (104) des Hauptkörpers (2) zusammenwirkt, um jede Translation des Verriegelungsteils (200) entlang der Innenfläche (102) des Hauptkörpers (100) zu verhindern, und
b) die Kopplungsschulter (202) des mindestens einen Kopplungsarms (201) in der Entriegelungsstellung (P₀) nicht mit dem Blockieranschlag (104) des Hauptkörpers (100) zusammenwirkt, so dass das Verriegelungsteil (200) entlang der Innenfläche (102) des Hauptkörpers (100) translatorisch frei beweglich ist,
und wobei die Sicherheitsvorrichtung (1) mit dem Gasabgabeventil (50) zusammenwirkt, wenn das Verriegelungsteil (200) in der Verriegelungsstellung (P₁) ist, um jede Abgabe von Gas durch den Gasauslassstutzen (51) des Gasabgabeventils (20) zu verhindern, indem jede manuelle Betätigung des Öffnungs-/Schließelements für Gas (52) verhindert wird.

2. Behälter nach Anspruch 1, **dadurch gekennzeichnet, dass** das Verriegelungsteil (200) zwei Kopplungsarme (201) umfasst, die jeweils eine Kopplungsschulter (202) umfassen, wobei die beiden Kopplungsarme (201) parallel zueinander mit sich gegenüber liegenden Kopplungsschultern (202) angeordnet sind.

3. Behälter nach einem der vorhergehenden Ansprüche, **dadurch gekennzeichnet, dass** der Blockieranschlag (104) des Hauptkörpers (100) eine untere Fläche (104a) umfasst, an welcher die Kopplungsschulter oder -schultern (202) des oder der Kopplungsarme (201) in der Verriegelungsstellung (P₁) anliegen, wobei die untere Fläche (104a) bevorzugt plan ist.

4. Behälter nach einem der vorhergehenden Ansprüche, **dadurch gekennzeichnet, dass** der oder die Kopplungsarme (201) aus mindestens einem elastisch verformbaren Material, bevorzugt mindestens einem Polymer, gebildet sind.

5. Behälter nach einem der vorhergehenden Ansprüche, **dadurch gekennzeichnet, dass**:
- der oder die Kopplungsarme (201) des Verriegelungsteils (200) jeweils ein freies Ende (203) umfassen, das ein vorderes Rampenprofil (203a) umfasst, und
- der Blockieranschlag (104) des Hauptkörpers (100) eine obere Fläche (104b) umfasst, die so geformt (104c) ist, dass sie mit dem vorderen Rampenprofil (203a) des oder jedes Kopplungsarms (201) so zusammenwirkt, dass eine Spreizung durch elastische Verformung des oder der Kopplungsarme (201) in Bezug auf den Blockieranschlag (104) bewirkt wird, wenn sich das Verriegelungsteil (200) translatorisch in Richtung des Blockieranschlags (104) bewegt, und dass das vordere Rampenprofil (203a) des oder der Kopplungsarme (201) an der geformten (104c) oberen Fläche (104b) des Blockieranschlags (104) anliegt.

6. Behälter nach Anspruch 5, **dadurch gekennzeichnet, dass**:
- das vordere Rampenprofil (203a) an dem freien Ende (203) jedes Kopplungsarms (201) plan oder gekrümmt ist und/oder
- die obere Fläche (104b) des Blockanschlags (104) geformt (104c) ist, so dass sie eine oder mehrere gekrümmte Ränder (105) aufweist.

7. Behälter nach Anspruch 1, **dadurch gekennzeichnet, dass** das Verriegelungsteil (200) ferner ein Schnapperteil (300) umfasst, das beweglich an dem Verriegelungsteil (200) montiert ist und dazu ausgestaltet ist, sich aus einer passiven Stellung in eine aktive Stellung zu verlagern, in der das Schnapperteil (300) radial in die innere Aufnahme (103) des eine Hülse (101) bildenden Hauptkörpers (100) hineinragt, wenn das Verriegelungsteil (200) in der Verriegelungsstellung (P₁) ist.

8. Behälter nach den Ansprüchen 1 oder 7, **dadurch gekennzeichnet, dass**:
- das Verriegelungsteil (200) durch Hauptschienen (106), die in dem eine Hülse (101) bildenden Hauptkörper (100) angeordnet sind, während einer Verlagerung zwischen der Entriegelungsstellung (P₀) und der Verriegelungsstellung (P₁), oder umgekehrt, geführt wird, und/oder
- das Schnapperteil (300) durch Nebenschienen (204), die an dem Verriegelungsteil (200) angeordnet sind, während einer Verlagerung aus der passiven Stellung in die aktive Stellung, oder umgekehrt, geführt wird.

9. Behälter nach Anspruch 1, **dadurch gekennzeichnet, dass** das Verriegelungsteil (200) zwei Kopplungsarme (201) umfasst, die an einem Rahmen (206) angeordnet sind, bevorzugt das Schnapperteil (300) beweglich an dem Rahmen (206) angeordnet ist.

10. Behälter nach einem der vorhergehenden Ansprüche, **dadurch gekennzeichnet, dass** er einen zylindrischen Körper (501) umfasst, der ein Innenvolumen definiert, um darin Gas, insbesondere ein medizinisches Gas, zu speichern.

11. Behälter nach einem der vorhergehenden Ansprüche, **dadurch gekennzeichnet, dass** er eine Druckgasflasche ist.

12. Behälter nach einem der vorhergehenden Ansprüche, **dadurch gekennzeichnet, dass** das Gasabgabeventil (20) ein Öffnungs-/Schließelement für Gas (52) umfasst, das um die Achse AA des Ventils (50) herum drehbeweglich ist, wobei das Öffnungs-/Schließelement für Gas (52) an dem oberen Ende (50A) des Gasabgabeventils (20) angeordnet ist.

13. Behälter nach einem der Ansprüche 7 bis 9, **dadurch gekennzeichnet, dass** das Schnapperteil (300) in der aktiven Stellung radial in die innere Aufnahme (103) des Hauptkörpers (100) hineinragt und mit dem Gasabgabeventil (50) zusammenwirkt, um ein Entfernen der abnehmbaren Sicherheitsvorrichtung (1) von dem Gasabgabeventil (50) zu verhindern.

14. Behälter nach einem der Ansprüche 7 bis 9 oder 13, **dadurch gekennzeichnet, dass** das Schnapperteil (300) in der aktiven Stellung radial in die innere Aufnahme (103) des Hauptkörpers (100) hineinragt und gegen einen Teil des Ventils (50) anschlägt, um ein Entfernen der Sicherheitsvorrichtung (1) zu verhindern.

15. Verwendung eines Behälters nach einem der vorhergehenden Ansprüche zum Speichern eines medizinischen Gases, das aus Sauerstoff und einem Gemisch aus Distickstoffmonoxid (N₂O) und Sauerstoff (O₂) gewählt ist.

## Claims

1. Pressurized gas container (500) comprising a gas distribution valve (50) comprising at least one gas outlet coupling (51) for distributing gas and at least one gas opening/closing member controlling the supply of gas to the gas outlet coupling (51), a removable safety device (1) being arranged around the gas distribution valve (50), said safety device (1) comprising:
- a main body (100) forming a sleeve (101) comprising:
∘ an inner housing (103) delimited by an inner face (102) and intended to house at least a portion of a gas distribution valve (50), and
∘ at least one blocking stop (104) arranged on the inner side of the main body (100),
- a locking part (200) comprising at least one securing arm (201) comprising a securing shoulder (202), said locking part (200) being arranged to be movable in axial translation (AA) in the main body (100), between at least one unlocking position (P₀) and a locking position (P₁), wherein:
a) in the locking position (P₁), the securing shoulder (202) of said at least one securing arm (201) cooperates with said at least one blocking stop (104) of the main body (2) to prevent any translation of the locking part (200) along the inner face (102) of the main body (100), and
b) in the unlocking position (P₀), the securing shoulder (202) of said at least one securing arm (201) does not cooperate with the blocking stop (104) of the main body (100) so that the locking part (200) is free to translate along the inner face (102) of the main body (100),
and said safety device (1) cooperating with said gas distribution valve (50) when the locking part (200) is in the locking position (P₁) to prevent any distribution of gas through the gas outlet coupling (51) of the gas distribution valve (20) while preventing any manual manipulation of the gas opening/closing member (52).

2. Container according to Claim 1, **characterized in that** the locking part (200) comprises two securing arms (201) each comprising a securing shoulder (202), the two securing arms (201) being arranged parallel to each other with the securing shoulders (202) facing each other.

3. Container according to either of the preceding claims, **characterized in that** the blocking stop (104) of the main body (100) comprises a lower surface (104a) on which the securing shoulder or shoulders (202) of the securing arm or arms (201) come to bear, in the locking position (P₁), the lower surface (104a) preferably being planar.

4. Container according to one of the preceding claims, **characterized in that** the securing arm or arms (201) are formed from at least one elastically deformable material, preferably at least one polymer.

5. Container according to one of the preceding claims, **characterized in that**:
- the securing arm or arms (201) of the locking part (200) each comprise a free end (203) comprising a front profile (203a) forming a ramp, and
- the blocking stop (104) of the main body (100) comprises an upper surface (104b) shaped (104c) to cooperate with the front profile (203a) forming a ramp of the or each securing arm (201) so as to generate a spacing by elastic deformation of the securing arm or arms (201) with respect to the blocking stop (104) when the locking part (200) translates in the direction of the blocking stop (104) and the front profile (203a) forming a ramp of the securing arm or arms (201) comes to bear on the shaped (104c) upper surface (104b) of the blocking stop (104).

6. Container according to Claim 5, **characterized in that**:
- the front profile (203a) forming a ramp at the free end (203) of each securing arm (201) is planar or curved and/or
- the upper surface (104b) of the blocking stop (104) is shaped (104c) to have one or more curved edges (105).

7. Container according to Claim 1, **characterized in that** the locking part (200) further comprises a latch part (300) movably mounted on said locking part (200) and configured to move from a passive position to an active position in which the latch part (300) projects radially into the inner housing (103) of the main body (100) forming a sleeve (101) when the locking part (200) is in the locking position (P₁).

8. Container according to Claim 1 or 7, **characterized in that**:
- the locking part (200) is guided by main slides (106) arranged in the main body (100) forming a sleeve (101) during a movement between the unlocking position (P₀) and the locking position (P₁), or vice versa, and/or
- the latch part (300) is guided by secondary slides (204) arranged on the locking part (200) during a movement from the passive position to the active position, or vice versa.

9. Container according to Claim 1, **characterized in that** the locking part (200) comprises two securing arms (201) arranged on a frame (206), preferably the latch part (300) being arranged movably on the frame (206).

10. Container according to one of the preceding claims, **characterized in that** it comprises a cylindrical body (501) defining an internal volume for storing gas, in particular a medical gas, therein.

11. Container according to one of the preceding claims, **characterized in that** it is a pressurized gas cylinder.

12. Container according to one of the preceding claims, **characterized in that** the gas distribution valve (20) comprises a gas opening/closing member (52) which is rotatable about the axis AA of the valve (50), said gas opening/closing member (52) being arranged at the upper end (50A) of the gas distribution valve (20).

13. Container according to one of Claims 7 to 9, **characterized in that**, in the active position, the latch part (300) projects radially into the inner housing (103) of the main body (100) and cooperates with the gas distribution valve (50) to prevent removal of the removable safety device (1) from the gas distribution valve (50).

14. Container according to one of Claims 7 to 9 or 13, **characterized in that**, in the active position, the latch part (300) projects radially into the inner housing (103) of the main body (100) and abuts against a part of the valve (50) to prevent the removal of the safety device (1).

15. Use of a container according to one of the preceding claims for storing a medical gas selected from oxygen and a mixture of nitrous oxide (N₂O) and oxygen (O₂).
